Europäisches Patentamt

European Patent Office

Office européen des brevets

(11) Veröffentlichungsnummer: **0 338 432 B1**

# EUROPÄISCHE PATENTSCHRIFT

(45) Veröffentlichungstag der Patentschrift: **11.11.92**

(21) Anmeldenummer: **89106607.8**

(22) Anmeldetag: **13.04.89**

(51) Int. Cl.⁵: **B01D 25/12**

(54) Filtervorrichtung für eine Flüssigkeitenmischung.

(30) Priorität: **21.04.88 DE 3813343**

(43) Veröffentlichungstag der Anmeldung:
**25.10.89 Patentblatt 89/43**

(45) Bekanntmachung des Hinweises auf die
Patenterteilung:
**11.11.92 Patentblatt 92/46**

(84) Benannte Vertragsstaaten:
**AT BE CH DE ES FR GB GR IT LI LU NL SE**

(56) Entgegenhaltungen:
**EP-A- 0 008 395**
**FR-A- 2 289 224**

**CHEMIE INGENIEUR TECHNIK, Band 56, Nr. 8,
August 1984, Seiten 573-578, Verlag Chemie
GmbH, Weinheim, DE; E. FISCHER et al.:
"Ouerstromfiltration"**

(73) Patentinhaber: **APPARATEBAU BIERSDORF
Walter Krämer Gesellschaft mit beschränkter Haftung, Rain am Lech
Donauwörther Strasse 47
W-8852 Rain am Lech(DE)**

(72) Erfinder: **Hölzemann, Jürgen
25 Ziegelmoosstrasse
W-8852 Rain am Lech(DE)**

(74) Vertreter: **Böhme, Volker, Dipl.-Ing. et al
Patentanwälte Dipl.-Ing. E. Kessel Dipl.Ing. V.
Böhme Karolinenstrasse 27
W-8500 Nürnberg 1(DE)**

## Beschreibung

Die Erfindung betrifft eine Filtervorrichtung gemäß dem Oberbegriff des Patentanspruches 1.

Bei einer bekannten (FR-A-2 289 224) Filtervorrichtung dieser Art sind die Filtermittel der Kammern und sonstige Einrichtungen darauf abgestimmt, einen Feststoffschlamm als Filtergut zurückzuhalten, wobei etwaige vorhandene andere flüssige Teilkomponenten vermischt mit der wässrigen Komponente durch die Filtermittel hindurchtreten.

Bei einer weiteren bekannten (DE-C-3 426 527) Filtervorrichtung wird sämtlichen Kammern eine mit Feststoffteilchen beladene Flüssigkeitenmischung zugeführt und sind die Filtermittel aller Kammern auf die Zurückhaltung der Feststoffteilchen abgestimmt. Die Flüssigkeitenmischung verläßt sämtliche Kammern und die Filtervorrichtung, abgesehen davon, daß sie von den Feststoffteilchen gereinigt ist, unverändert. Der Ablaß Jeder Kammer führt zu einem gemeinsamen Abflußrohr für die Flüssigkeitenmischung. Jede Kammer ist zweiteilig gebaut und die Kammerteile werden auseinandergefahren, um einen sich bildenden Feststoff-Filterkuchen zu entfernen. Durch diese Filtervorrichtung läuft eine Flüssigkeitenmischung, die aus zwei flüssigen Teilkomponenten, z. B. Schmutzkomponenten, z. B. Öl und Tenside, und einer wässrigen Komponente besteht, unverändert hindurch.

Aufgabe der Erfindung ist es daher, eine Filtervorrichtung gemäß Oberbegriff des Patentanspruchs 1 dahingehend weiterzuentwickeln, daß sie zum Abtrennen von flüssigen Teilkomponenten einer Flüssigkeitenmischung geeignet ist. Die erfindungsgemäße Filtervorrichtung weist, diese Aufgabe lösend, die kennzeichnenden Merkmale des Patentanspruchs 1 auf.

Aufgrund der Erfindung läßt sich eine an sich bekannte Filtervorrichtung bzw. Kammerfilterpresse bzw. Rotorfilterpresse recht einfach zum Ausfiltern von flüssigen Teilkomponenten, z. B. Schmutzkomponenten umrüsten. In der an sich bekannten Filtervorrichtung werden die an sich bekannten Filtermittel zum Ausfiltern der jeweils höher molekularen flüssigen Teilkomponenten von den übrigen niedriger molekularen flüssigen Teilkomponenten und der wässrigen Komponente verwendet. Jeder Kammer wird eine andere Flüssigkeitenmischung zugeführt und das aus der jeweils vorhergehenden Kammer abgelassene Filtrat ist die der nachfolgenden Kammer zugeführte Flüssigkeitenmischung oder die wässrige Komponente in der jeweils erwünschten Wasser-Reinheit. Das Ausfiltern von flüssigen Teilkomponenten wird so oft in einer Mehrzahl von Kammern wiederholt, bis die wässrige Lösung in der erwünschten Reinheit vorliegt. Für ein wirtschaftliches und wirksames Ausfiltern von flüssigen Teilkomponenten mittels auf die Molekulargröße abgestimmter Filtermittel sind die mit Strömungsrippen versehenen Rotorscheiben wichtig. Der cross-flow-Effekt ist auch bei der Zurückhaltung der flüssigen Teilkomponenten von Bedeutung.

Die erfindungsgemäße Filtervorrichtung läßt sich für eine Flüssigkeitenmischung ohne Feststoffteilchen ausbilden und einsetzen. Besonders zweckmäßig und vorteilhaft ist es, wenn den Kammern für die Zurückhaltung der flüssigen Teilkomponenten mindestens eine Kammer mit einem Filtermittel zum Zurückhalten von Feststoffteilchen vorgeordnet ist, wobei der Kammer eine Einrichtung zur Entfernung eines Feststoffteilchen-Filterkuchens zugeordnet ist und der Ablaß dieser Kammer mit dem Einlaß der ersten für die Zurückhaltung einer flüssigen Teilkomponente bestimmten Kammer verbunden ist. Es wird eine mit Feststoffteilchen beladene Flüssigkeitenmischung verarbeitet, die zunächst von den Feststoffteilchen befreit wird, bevor die flüssigen Teilkomponenten von der wässrigen Komponente abgeschieden werden. Die Einrichtung zum Entfernen des FeststoffteilchenFilterkuchens besteht z.B. aus auseinanderfahrbaren Kammerteilen.

Wenn eine Flüssigkeitenmischung eine Vielzahl verschiedener flüssiger Teilkomponenten hat, die abzufiltern sind, so ist es denkbar, die Kammern in zwei oder mehr verschiedenen Geräten unterzubringen, die durch eine Rohrleitung miteinander verbunden sind. Besonders zweckmäßig und vorteilhaft ist es jedoch, wenn sämtliche Kammern für die Zurückhaltung von flüssigen Teilkomponenten ein einheitliches Gerät bildend in einem gemeinsamen Gehäuse zusammengefaßt sind. Die Auftrennung der Flüssigkeitenmischung in die verschiedenen flüssigen Komponenten erfolgt also mittels nur eines Gerätes, wobei bei einem solchen Gerät in der Regel alle Rotorscheiben auf einer gemeinsamen Welle sitzen und von einem Motor angetrieben sind.

Es ist denkbar, die mindestens eine Kammer für die Zurückhaltung von Feststoffteilchen und Kammern für die Zurückhaltung von flüssigen Teilkomponenten in zwei verschiedenen Geräten unterzubringen, die durch eine Rohrleitung miteinander verbunden sind. Besonders zweckmäßig und vorteilhaft ist es jedoch, wenn die mindestens eine Kammer für die Zurückhaltung von Feststoffteilchen und Kammern für die Zurückhaltung von flüssigen Teilkomponenten ein einheitliches Gerät bildend in einem gemeinsamen Gehäuse zusammengefaßt sind. Es erfolgen die Abtrennung der Feststoffteilchen und die von mindestens einer flüssigen Teilkomponente mittels nur eines Gerätes, wobei bei einem solchen Gerät, wie bereits erwähnt, in der Regel alle Rotorscheiben auf einer gemeinsamen Welle sitzen und von nur einem Motor angetrieben sind.

Eine vorteilhafte Ausgestaltung der Filtervorrichtung der eingangs genannten Art liegt in an sich bekannter (DE-C 34 26 527) Weise vor, wenn zwei Filtermittel durch einen Hohlraum zur Filtrataufnahme voneinander getrennt sind und eine beidseitig mit Strömungsrippen versehene Rotorscheibe zwischen zwei Filtermitteln angeordnet ist. In diesem Fall ist es besonders zweckmäßig und vorteilhaft, wenn der Raum zwischen den beiden Filtermitteln durch eine Trennwand in zwei voneinander gesonderte Hohlräume zur Filtrataufnahme unterteilt ist und eine am Umfang der Rotorscheibe vorgesehene in sich geschlossene Dichtung die beiden beiderseits der Rotorscheibe vorgesehenen Hohlräume zur Filtergutaufnahme voneinander trennt. Hierdurch ist die erwähnte vorteilhafte Ausgestaltung an die erfindungsgemäße Bauweise angepaßt. In den beiden durch die Trennwand voneinander getrennten Hohlräumen und in den beiden durch die mit Dichtung versehene Rotorscheibe voneinander getrennten Hohlräume werden jeweils verschiedene Substanzen aufgenommen bzw. verarbeitet. Jeder der durch die Trennwand getrennten Hohlräume hat einen eigenen Auslaß und jeder der durch die Rotorscheibe mit Dichtung getrennten Hohlräume hat einen eigenen Einlaß.

In den Hohlräumen, in denen kein Feststoffteilchen-Filterkuchen anfällt, können nichtflüssige Rückstände anfallen. Im Hinblick darauf ist es besonders zweckmäßig und vorteilhaft, wenn im Mantel durch Deckel verschließbare kleine Öffnungen den Hohlräumen zum Entfernen von nichtflüssigen Rückständen zugeordnet sind. Durch die in der Regel an der Unterseite vorgesehenen kleinen Öffnungen werden die nichtflüssigen Rückstände herausgekratzt oder herausgespült.

Es wird jetzt zum Entfernen des flüssigen Filtergutes ein die Kammern umgebender Mantel nicht in Teilen axial auseinandergezogen, wobei auch das Filtermittel ausgewechselt werden kann. Besonders zweckmäßig und vorteilhaft ist es daher, wenn im Mantel durch Deckel verschließbare große Öffnungen den Filtermitteln zum Auswechseln der Filtermittel zugeordnet sind. Diese großen Öffnungen und deren Deckel bzw. Klappen erstrecken sich in der Regel über den halben Umfang des Mantels. In der Regel wird ein das Filtermittel tragender Stator herausgenommen und nach Austausch des Filtermittels wieder eingesetzt.

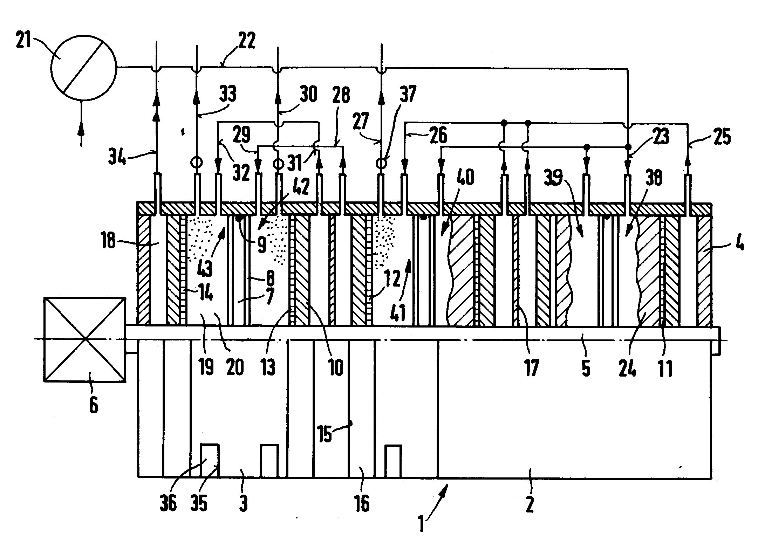

In der Zeichnung ist eine bevorzugte Ausführungsform der Erfindung dargestellt und zwar eine Filtervorrichtung für eine Flüssigkeitenmischung, teilweise in Seitenansicht und teilweise im Schnitt.

Die Filtervorrichtung gemäß Zeichnung ist eine Kammerfilterpresse bzw. Rotorfilterpresse und als einheitliches kompaktes Gerät ausgebildet. Die Filtervorrichtung umfaßt einen zylindrischen Mantel 1, der von zwei zylindrischen Mantelstücken 2, 3 gebildet ist und an beiden Enden durch je eine Stirnwand 4 abgeschlossen ist. Durch das von dem Mantel 1 und den beiden Stirnwänden 4 gebildete Gehäuse verläuft mittig eine Welle 5, die von einem außerhalb des Gehäuses angeordneten Motor 6 antreibbar ist und im Gehäuse mit Abstand voneinander angeordnete Rotorscheiben 7 trägt, die jeweils an beiden Stirnseiten mit radial verlaufenden Strömungsrippen 8 versehen sind. Um den Umfang jeder Rohrscheibe 7 verläuft eine Dichtung 9 gegenüber dem Mantel 1, so daß die Rotorscheibe nicht in axialer Richtung von Flüssigkeit passiert werden kann.

Mit Abstand von jeder Rotorscheibe 7 ist beiderseits jeder Rotorscheibe im Gehäuse ein Stator 10 angeordnet, durch den Flüssigkeit nahezu ungehindert hindurchtreten kann und an dem auf der der Rotorscheibe 7 zugeordneten Seite ein scheibenförmiges Filtermittel angebracht ist. Es sind drei gleichartige Filtermittel 11 und drei verschiedenartige Filtermittel 12, 13, 14 vorgesehen. Die Welle 5 ist in an sich bekannter Weise aus verschiedenen Stücken zusammengesetzt und läßt sich auseinanderziehen, wonach die Statoren 10 mit den Filtermitteln durch große Öffnungen 15 im Mantel 1 herausgenommen werden können. Die großen Öffnungen 15 sind von entsprechend großen Deckeln 16 bzw. Klappen verschlossen und in dem einen Mantelstück 2 vorgesehen.

Mit Abstand von den beiden äußeren Statoren 10 ist jeweils eine der beiden Stirnwände 4 vorgesehen und mittig zwischen je zwei inneren Statoren 10 ist jeweils eine Trennwand 17 vorgesehen. Jede Trennwand 17 ist von der Welle 5 drehbar, jedoch flüssigkeitsdicht durchdrungen und läßt keine Flüssigkeit von der einen Seite auf die andere Seite passieren. Es sind in dem Gehäuse Kammern 38, 39, 40, 41, 42, 43 gebildet, die radial nach außen von dem Mantel 1 begrenzt sind. Im Inneren jeder Kammer befindet sich ein mit Filtermittel versehener Stator 10, ein Hohlraum 18 zur Filtrataufnahme, ein Hohlraum 19 zur Filtergutaufnahme und ein Hohlraum 20 zur Trübenaufnahme. Der Hohlraum 20 zur Trübenaufnahme und der Hohlraum 19 zur Filtergutaufnahme gehen bei der vorliegenden Ausführungsform völlig ungetrennt ineinander über. Jede Kammer 38, 39, 40, 41, 42, 43 ist einerseits von einem Rotor 7 und andererseits von einer Stirnwand 4 oder einer Trennwand 17 begrenzt.

Von einer Pumpe 21 wird über eine Zuleitung 22 eine mit Feststoffteilchen beladene Flüssigkeitenmischung zu einem Einlaß 23 der (von rechts gesehen) ersten drei Kammern 38, 39, 40 parallel zugeführt. In dem Hohlraum 19 zur Filtergutaufnahme jeder dieser drei Kammern 38, 39, 40 bildet sich ein Feststoffteilchen-Filterkuchen 24. Die Filterkuchen 24 können entfernt werden, indem das Mantelstück 2 mittels einer nicht gezeigten Kolben-Zylinder-Einrichtung in Achsrichtung abgezogen wird. Über Auslässe 25 der drei Kammern 38, 39, 40 tritt die von Feststoffteilchen gereinigte Flüssigkeitenmischung aus. Diese drei Auslässe 25 sind zusammengeführt und zu einem Einlaß 26 einer vierten Kammer 41 geführt, deren Hohlraum 19 zur Filtergutaufnahme mit einer nach außen führenden Leitung 27 versehen ist, in der ein Ventil 37 vorgesehen ist. In dem Hohlraum sammelt sich eine erste flüssige Schmutzkomponente an, die über die Leitung 27 abgeführt wird. Die von der ersten Schmutzkomponente befreite Flüssigkeit sammelt sich in dem Hohlraum zur Filtrataufnahme der vierten Kammer 41 und wird von dort über einen Ablaß 28 abgeführt und einem Einlaß 29 einer fünften Kammer 42 zugeführt. Die fünfte Kammer 42 ist mit einer nach außen führenden, mit Ventil 37 versehenen Leitung 30 für eine zweite flüssige Schmutzkomponente versehen und weist einen Auslaß 31 für die von der zweiten Schmutzkomponente befreite Flüssigkeit auf. Der Auslaß 31 ist mit einem Einlaß 32 einer sechsten Kammer 43 verbunden, die eine nach außen führende, mit Ventil 37 versehene Leitung 33 für eine dritte flüssige Schmutzkomponente aufweist und an einem Auslaß 34 mehr oder weniger gereinigtes Wasser abgibt.

Jedem Hohlraum 19 zur Filtergutaufnahme ist im Mantel 1 und zwar in dessen feststehenden Mantelstück 3 eine kleine Öffnung 35 zugeordnet, die von einem kleinen Deckel 36 oder einer Klappe verschlossen ist. Es wird eine aus einer Autowaschanlage stammende Flüssigkeitenmischung gereinigt, der zunächst Feststoffteilchen, die von Sand, Lack oder Fett gebildet sind, entzogen wird. In den nachfolgenden Kammern werden flüssige Schmutzkomponenten wie Öl, Benzin, Fette, Salzaufmischungen und Tenside herausgefiltert. Verwendbare Filtermittel werden von den Firmen Pal und Milipor hergestellt. Die Verwendung von zwei oder mehr parallelen Kammern zum Zurückhalten von Feststoffteilchen erfolgt in der Regel und ist durch den Gehalt an Feststoffteilchen in der Flüssigkeitenmischung bedingt; es ist aber auch möglich, mit nur einer Kammer zum Zurückhalten von Feststoffteilchen zu arbeiten. In der Praxis sind zwei durch eine Trennwand 17 getrennte Statoren 10 baulich zu einer Statoreinrichtung zusammengefaßt, die in der Mitte durch die Trennwand unterteilt ist. Der Druck der zugeführten Flüssigkeitenmischung wirkt sich auch dahin aus, daß die Flüssigkeit auch über die Einlässe 26, 29 und 32 zufließt. Sollte der Druck hierzu nicht ausreichen, so werden kleine Pumpen zwischengeschaltet.

**Patentansprüche**

1. Filtervorrichtung für eine Flüssigkeitenmischung, die aus mindestens zwei flüssigen Teilkomponenten und einer wäßrigen Komponente besteht, wobei eine flüssige Teilkomponente größter Molekulargröße der Flüssigkeitenmischung und eine flüssige Teilkomponente größter Molekulargröße eines Filtrats gegeben sind, bei der zwei oder mehr Kammern (41, 42) vorgesehen sind, bei denen jeweils ein Hohlraum (18) zur Filtrataufnahme durch ein Filtermittel (12, 13) von einem Hohlraum (19) zur Filtergutaufnahme getrennt ist, dem andererseits eine mit Strömungsrippen (8) versehene Rotorscheibe (7) sowie ein Hohlraum (20) zur Trübenaufnahme zugeordnet ist, und
bei der der Trübenaufnahme-Hohlraum (20) der ersten Kammer (41) mit einer Zufuhreinrichtung (26) für die Flüssigkeitenmischung verbunden ist, den Kammern (41, 42) Abführungs-Leitungen (27, 30) zugeordnet sind und ein Vorrichtungsauslaß (34) vorgesehen ist,
**dadurch gekennzeichnet,**
daß das Filtermittel (12) der ersten Kammer (41) auf die flüssige Teilkomponente größter Molekulargröße der Flüssigkeitenmischung abgestimmt ist und das Filtermittel (13) der zweiten Kammer (42) auf die flüssige Teilkomponente größter Molekulargröße des Filtrats aus der vorhergehenden Kammer (41) abgestimmt ist,
daß der Filtergut-Hohlraum (19) der ersten Kammer (41) mit deren Abführungs-Leitung (27) verbunden ist und der Filtrat-Hohlraum (18) der ersten Kammer (41) mit dem Trüben-Hohlraum (20) der zweiten Kammer (42) verbunden ist, und daß der Filtergut-Hohlraum (19) der zweiten Kammer (42) mit deren Abführungs-Leitung (30) verbunden ist und der Filtrat-Hohlraum (18) der zweiten Kammer (42) mit dem Vorrichtungsauslaß (34) für die wäßrige Komponente in Verbindung steht.

2. Filtervorrichtung nach Anspruch 1, **dadurch gekennzeichnet,** daß den Kammern für die Zurückhaltung der flüssigen Teilkomponenten mindestens eine Kammer mit einem Filtermittel (11) zum Zurückhalten von Feststoffteilchen vorgeordnet ist, wobei der Kammer eine Einrichtung (2) zur Entfernung eines Feststoffteilchen-Filterkuchens zugeordnet ist und der Ablaß (25) dieser Kammer mit dem Einlaß (26) der ersten für die Zurückhaltung einer flüssigen Teilkomponente bestimmten Kammer verbunden ist.

3. Filtervorrichtung nach Anspruch 1, **dadurch gekennzeichnet,** daß sämtliche Kammern für die Zurückhaltung von flüssigen Teilkomponenten ein einheitliches Gerät bildend in einem gemeinsamen Gehäuse (1, 4) zusammengefaßt sind.

4. Filtervorrichtung nach Anspruch 2 oder 3, **dadurch gekennzeichnet,** daß die mindestens eine Kammer für die Zurückhaltung von Feststoffteilchen und Kammern für die Zurückhaltung von flüssigen Teilkomponenten ein einheitliches Gerät bildend in einem gemeinsamen Gehäuse (1, 4) zusammengefaßt sind.

5. Filtervorrichtung nach einem der vorhergehenden Ansprüche, wobei zwei Filtermittel durch Hohlraum zur Filtrataufnahme voneinander getrennt sind und eine beidseitig mit Strömungsrippen versehene Rotorscheibe zwischen zwei Filtermitteln angeordnet ist, **dadurch gekennzeichnet,** daß der Raum zwischen den beiden Filtermitteln (12, 13) durch eine Trennwand (17) in zwei voneinander gesonderte Hohlräume (18) zur Filtrataufnahme unterteilt ist und eine am Umfang der Rotorscheibe (7) vorgesehene umlaufende Dichtung (9) die beiden beiderseits der Rotorscheibe (7) vorgesehenen Hohlräume (20) zur Filtergutaufnahme voneinander trennt.

6. Filtervorrichtung nach einem der vorhergehenden Ansprüche, wobei jede Kammer von einem Mantel umschlossen ist, **dadurch gekennzeichnet,** daß im Mantel (1) durch Dekkel (36) verschließbare kleine Öffnungen (35) den Hohlräumen (19) zum Entfernen von nicht flüssigen Rückständen zugeordnet sind.

7. Filtervorrichtung nach einem der vorhergehenden Ansprüche, wobei jede Kammer von einem Mantel umschlossen ist, **dadurch gekennzeichnet,** daß im Mantel (1) durch Dekkel (16) verschließbare große Öffnungen (15) den Filtermitteln (12, 13, 14) zum Auswechseln der Filtermittel zugeordnet sind.

**Claims**

1. A filter device for a liquid mixture comprising at least two liquid part components and an aqueous component, a liquid part component having the greatest molecular size of the liquid mixture and a liquid part component having the greatest molecular size of a filtrate being present, wherein two or more chambers (41, 42) are provided, in which a cavity (18) for receiving the filtrate is separated by a filter means (12, 13) from a cavity (19) for receiving the mixture to be filtered, a rotor disc (7) provided with flow ribs (8) and a cavity (20) for receiving the sludge being associated with the cavity (19), and in which the sludge-receiving cavity (20) of the first chamber (40) is connected with a supply device (26) for the liquid mixture, discharge lines (27, 30) are associated with the chambers (41, 42) and a device outlet (34) is provided, characterised in that the filter means (12) of the first chamber (41) is adapted to the liquid part component having the greatest molecular size of the liquid mixture and the filter means (13) of the second chamber (42) is adapted to the liquid part component having the greatest molecular size of the filtrate from the preceding chamber (41), the filter material cavity (19) of the first chamber (41) is connected with the discharge line (27) thereof and the filtrate cavity (18) of the first chamber (41) is connected with the sludge cavity (20) of the second chamber (42), and the filter material cavity (19) of the second chamber (42) is connected with the discharge line (30) thereof and the filtrate cavity (18) of the second chamber (42) is connected with the device outlet (34) for the aqueous component.

2. A filter device according to claim 1, characterised in that arranged upstream of the chambers for the retention of the liquid part components is at least one chamber with a filter means (11) for retaining solid particles, a device (2) for removing a solid particle filter cake being associated with said chamber and the outlet (25) of said chamber being connected with the inlet (26) of the first chamber for the retention of a liquid part component.

3. A filter device according to claim 1, characterised in that all chambers for the retention of liquid part components are combined in a common housing (1, 4) to form an integrated system.

4. A filter device according to claim 2 or 3, characterised in that the at least one chamber for the retention of solid particles and chambers for the retention of liquid part components are combined in a common housing (1, 4) to form an integrated system.

5. A filter device according to one of the preceding claims, two filter means being separated from one another by a cavity for receiving filtrate and a rotor disc provided with flow ribs on both sides being arranged between two filter means, characterised in that the space between the two filter means (12, 13) is divided by a dividing wall (17) into two separate cavities (18) for receiving filtrate and a circumferential seal (9) provided on the circumference of the rotor disc (7) separates the two cavities (20) provided on either side of the rotor disc (7) for receiving filter material.

6. A filter device according to one of the preceding claims, each chamber being enclosed by a casing, characterised in that small openings (35) in the casing (1) closable by lids (36) are associated with the cavities (19) for removing non-liquid residues.

7. A filter device according to one of the preceding claims, each chamber being enclosed by a casing, characterised in that large openings (15) in the casing (1) closable by lids (16) are associated with the filter means (12, 13, 14) for exchanging the filter means.

**Revendications**

1. Dispositif filtrant pour un mélange de liquides constitué par au moins deux composantes liquides et une composante aqueuse, une composante liquide ayant une plus grande taille moléculaire du mélange de liquides et une composante aqueuse ayant une plus grande taille moléculaire d'un filtrat, dispositif dans lequel sont prévues au moins deux chambres (41, 42) dans chacune desquelles une cavité (18) pour recevoir le filtrat est séparée, par un moyen filtrant (12, 13), d'une cavité (19) destinée à recevoir le produit à filtrer et à laquelle sont conjugués par ailleurs un plateau rotorique (7) muni de nervures d'écoulement (8) et une cavité (20) réceptrice de boue, et dans lequel la cavité réceptrice de boue (20) de la première chambre (41) est reliée à un dispositif (26) pour l'amenée du mélange de liquides et des conduites d'évacuation (27, 30) sont conjuguées aux chambres (41, 42), et il est prévu une sortie de décharge (34) du dispositif,
caractérisé
par le fait que le moyen filtrant (12) de la première chambre (41) est approprié à la composante liquide de plus grande taille moléculaire du mélange de liquides et le moyen filtrant (13) de la deuxième chambre (42) est approprié à la composante liquide de plus grande taille moléculaire du filtrat provenant de la chambre précédente (41), par le fait que la cavité de produit à filtrer (19) de la première chambre (41) est reliée à la conduite d'évacuation (27) de celle-ci et la cavité de filtrat (18) de la première chambre (41) est reliée à la cavité de boue (20) de la deuxième chambre (42), et par le fait que la cavité de produit à filtrer (19) de la deuxième chambre (42) est reliée à la conduite d'évacuation (30) de celle-ci et la cavité de filtrat (18) de la deuxième chambre (42) communique avec la sortie (34) que le dispositif comporte pour la décharge de la composante aqueuse.

2. Dispositif filtrant selon revendication 1, caractérisé par le fait que les chambres destinées à retenir les composantes liquides sont précédées d'au moins une chambre avec un moyen filtrant (11) pour la rétention de particules solides, un dispositif (2) pour l'enlèvement d'un gâteau de particules solides étant associé à cette chambre, et la sortie (25) de cette chambre étant reliée à l'entrée (26) de la première chambre destinée à la rétention d'une composante liquide.

3. Dispositif filtrant selon revendication 1, caractérisé par le fait que toutes les chambres pour la rétention de composantes liquides sont regroupées dans une enceinte commune (1, 4) en formant un appareil homogène.

4. Dispositif filtrant selon revendication 2 ou 3, caractérisé par le fait que la chambre au nombre d'au moins une pour la rétention de particules solides et des chambres pour la rétention de composantes liquides sont regroupées dans une enceinte commune (1, 4) en formant un appareil homogène.

5. Dispositif filtrant selon l'une des revendications précédentes, dans lequel deux moyens filtrants sont séparés l'un de l'autre par une cavité réceptrice de filtrat, et un plateau rotorique dont les deux côtés sont pourvus de nervures d'écoulement est disposé entre deux moyens filtrants, caractérisé par le fait que l'espace entre les deux moyens filtrants (12, 13) est subdivisé, par une cloison (17), en deux cavités réceptrices de filtrat (18) distinctes l'une de l'autre, et un organe d'étanchéité circonférentiel (9) prévu sur la périphérie du plateau rotorique (7) sépare l'une de l'autre les deux cavités réceptrices de produit à filtrer (20) prévues de part et d'autre du plateau rotorique (7).

6. Dispositif filtrant selon l'une des revendications précédentes, dans lequel chaque chambre est entourée par une enveloppe, caractérisé par le fait que de petites ouvertures (35) dans l'enveloppe (1), obturables par des couvercles (36), sont conjuguées aux cavités (19), pour l'enlèvement de résidus non liquides.

7. Dispositif filtrant selon l'une des revendications précédentes, dans lequel chaque chambre est entourée par une enveloppe, caractérisé par le fait que de grandes ouvertures (15) dans l'enveloppe (1), obturables par des couvercles (16), sont conjuguées aux moyens filtrants (12, 13, 14), pour le remplacement de ceux-ci.